# EUROPÄISCHE PATENTSCHRIFT

(11) **EP 1 977 909 B1**
(45) Veröffentlichungstag und Bekanntmachung des Hinweises auf die Patenterteilung: **03.11.2010**
(21) Anmeldenummer: 08006261.5
(22) Anmeldetag: 31.03.2008
(51) Int. Cl.: B44C 5/04, E04F 15/10

(54) **Verfahren zur Herstellung einer Bauplatte**
Method for producing a structural panel
Procédé de fabrication d'un panneau de construction

(30) Priorität: 03.04.2007 DE 102007015969
(43) Veröffentlichungstag der Anmeldung: 08.10.2008
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- EP-A- 1 595 718
- WO-A-99/17930
- DE-A1- 10 220 501

## Beschreibung

Die Erfindung betrifft ein Verfahren zum Herstellen einer Bauplatte mit einem Kern aus einem Holzwerkstoff, insbesondere MDF oder HDF und einer auf einer Oberseite aufgebrachten Dekorschicht aus bedrucktem Papier, indem zunächst auf den Kern eine Hartschicht aufgebracht wird, auf die Hartschicht die trockene Dekorschicht aus nicht imprägniertem Papier aufgelegt, auf die Dekorschicht eine Imprägnierharzschicht aufgebracht und anschließend dieser Aufbau unter Druck und erhöhter Temperatur miteinander verpresst wird.

Ein solches Verfahren ist beispielsweise aus der DE 102 20 501 B4 bekannt.

Bei der Herstellung von melaminbeschichteten Platten werden verschiedene Papiere (Dekorpapiere, Overlays, Gegenzug-Papiere, Underlays usw.) zunächst in einer Imprägnieranlage mit einem duroplastischen Harz imprägniert, das Wasser als Lösemittel enthält. Danach wird dann in einem Trockenkanal das Papier auf eine definierte Feuchtigkeit von ca. 5 bis 7% zurückgetrocknet. Das duroplastische Harz geht dabei in einen Zustand über, in dem noch keine vollständige Verletzung der Harzmatrix erfolgt, aber die ursprüngliche Wasserlöslichkeit bereits sehr deutlich reduziert ist.

Anschließend werden diese Papiere dann im Kurztaktverfahren in einer Presse auf Holzwerkstoffe aufgepresst. Dabei wird mit Temperaturen von 190 bis 220 °C und Drücken von 20 bis 50 kg/cm² gearbeitet. Hier wird die Harzmatrix mit Hilfe der Pressbedingungen und ebenfalls verwendeten Härtern auf Basis von Säuren in ein dreidimensional vernetztes System überführt.

Die Papiere werden für den Imprägnierprozess auf großen Rollen zur Verfügung gestellt. Die Rollen können Gewichte von über 10.000 N erreichen. Am Ende des Imprägnierprozesses werden daraus über einen Querschneider Papierbögen produziert, die üblicherweise ein Format von bis zu 5,60 x 2,10 m haben können. Bei dem Imprägnierprozess treten erhebliche Materialverluste auf, die sich im Wesentlichen aus dem Papierverlust vorab (Verschmutzung, Beschädigung) und dem Verlust durch lmprägnate mit nicht eingehaltenen Imprägnierparametern (Harzauftrag, Feuchte) zusammensetzen. Die Imprägnate mit den nicht eingehaltenen Imprägnierparametern resultieren daraus, dass man an einer Imprägnieranlage eine gewisse Zeit benötigt, bis die Imprägnatparameter (Papier + Harz + Feuchte) korrekt eingestellt sind. Da dies bei laufender Anlage erfolgt und Imprägnieranlagen bei Geschwindigkeiten von 30 bis 80 m/min betrieben werden, kann dies bedeuten, dass bei einer benötigten Menge von 50 Imprägnaten oder weniger eine ebenso große Menge als Verlust auftritt. Dieses Problem wird umso größer, je kleiner die Losgröße des Imprägnats wird. Dies ist umso gravierender, da sich die Losgrößen in den Fertigungen ständig verringern und die Artikelanzahl vergrößert.

Das aus der DE 102 20 501 B4 bekannten direkt laminierten Platte zugrunde liegende Problem besteht darin, dass das Papierwachstum ausgeschlossen werden soll, was daraus resultiert, dass die mit dem Dekor bedruckte Papierschicht mit einem Melaminharz imprägniert wird, wodurch sich infolge der Feuchteaufnahme der Papierschicht deren Abmessungen in Längs- und Querrichtung verändern. Dieses Längen- und Breitenwachstum erfolgt im Grunde genommen nur schlecht reproduzierbar, weil es in starkem Maße von der verwendeten Papierqualität und der Menge des Imprägnierharz-Auftrages abhängt. Wird die Dekorschicht mit der Holzwerkstoffplatte verpresst, schmilzt das Imprägnierharz auf und verbindet das Dekorpapier mit dem Kern der Bauplatte. Dabei schrumpft das Dekorpapier. Um eine so hergestellte Holzwerkstoffplatte an die Erscheinung einer natürlichen Holzplatte weiter anzugleichen wird vielfach vorgesehen, in die Oberseite der laminierten Holzwerkstoffplatte eine Struktur einzuprägen, die zu dem Dekor (beispielsweise der Holzmaserung) passt, so dass nicht nur ein optischer, sondern auch ein haptischer natürlicher Eindruck entsteht. Die Schwierigkeit besteht darin, das Schrumpfmaß der Dekorschicht zu berücksichtigen, damit die Gravur der Pressplatte mit der Maserung des Dekors in Übereinstimmung ist, was in aller Regel nicht gelingt oder sehr kostenaufwendig ist, weil hochwertige Papiere und eine exakte Einhaltung der Dosierung des Imprägnierharzes notwendig ist.

Aus diesem Grund ist bei der bekannten Platte vorgesehen, das Dekorpapier trocken auf eine auf die Oberseite des Kerns aufgebrachte Melaminharzschicht aufzulegen und anschließend mit einer Melaminharzschicht abzudecken und diesen Aufbau dann mit dem Kern zu verpressen.

Durch die Verwendung des trockenen Papieres wird das Problem der Papierquellung minimiert. Durch die Verwendung zweier hoch beharzter Harzträger zwischen dem Dekorpapier hat aber die in dem nicht beharzten Dekorpapier eingeschlossene Luft während der Kurztaktbeschichtung keine Möglichkeit, aus dem System zu entweichen. Sie wird beim Verpressen durch die Druckbeaufschlagung komprimiert, bildet aber in dem System eine Schicht in die während des so genannten Fließprozesses des Harzes das Harz nicht oder nur unzureichend einpenetrieren kann. Damit bildet sich in dem resultierenden Laminat oder der Direktbeschichtung eine Schwachstelle, die in dem weiteren Fertigungsablauf bzw. der Nutzung der resultierenden Produkte (z. B. Laminatfußboden) zu Problemen führt.

Von dieser Problemstellung ausgehend soll das eingangs beschriebene Verfahren dahingehend verbessert werden, dass die im trockenen Dekorpapier enthaltene Luft beim Imprägnieren entweichen kann.

Zur Problemlösung zeichnet ein gattungsgemäßes Verfahren dadurch aus, dass die Harzschicht auf dem Kern flüssig aufgetragen und vor dem Auflegen des Dekorpapiers nur soweit getrocknet wird, dass das Harz in der Lage ist, von der Rückseite in das Dekor einzupenetrieren.

Durch diese Ausgestaltung dringt das Harz unmittelbar nach Auflage des Dekorpapiers in das Papier ein (es wird aufgesaugt) und verdrängt dabei die in der Papierschicht eingeschlossene Luft an die Oberseite und damit heraus.

Vorzugsweise wird das Dekorpapier mit einer Walze in das klebrige Harz eingewalzt. Dabei kann das Dekorpapier von einer Rolle kontinuierlich abgewickelt werden.

Vorzugsweise wird die Imprägnierharzschicht auf das Dekorpapier flüssig aufgebracht und auf das flüssige Harz pulverförmiges Harz und/oder, verschleißhemmende Partikel und/oder Zellulose aufgestreut, wobei der so erzeugte Feststoffgehalt der Imprägnierschicht bis zu 70% betragen kann. Das pulverförmige Harz, die verschleißhemmenden Partikel und/oder die Zellulose können auch vor dem Auftragen in das flüssige Harz eingemischt werden. Das beigegebene pulverförmige Harz erhöht den Feststoffgehalt, der zur Absenkung des Wassergehaltes führt. Die Beigabe verschleißhemmender Partikel erhöht die Abrieb- und Kratzfestigkeit der Oberfläche. Beigegebene Zellulose wird sich abdeckend über die Korundpartikel legen und den Verschleiß eines Pressbleches in einer nachfolgenden KT-Bearbeitung mindern.

Ziel der Erfindung ist auch, eine Harzrezeptur mit einem geringen Wassergehalt anzugeben, weil Wasser für die Papierquellung verantwortlich ist. Der niedrige Wassergehalt lässt sich durch einen hohen Feststoffgehalt realisieren.

Bevorzugt wird die Imprägnierschicht anschließend auf eine definierte Restfeuchte, insbesondere auf eine Restfeuchte von 5 bis 7% heruntergetrocknet.

Die auf den Kern aufgetragene Harzschicht kann in mehreren Einzelschichten, vorzugsweise in zwei Schichten aufgetragen werden, wobei es sinnvoll ist, jede einzelne Schicht nach ihrem Auftrag zu trocknen.

Vorzugsweise wird die Harzschicht in einer Menge von 20 bis 40 g/m² aufgetragen.

Die Verteilung des insgesamt aufgetragenen Harzes erfolgt mindestens zu einem Drittel und höchstens zu zwei Drittel auf den Kern.

Die Verpressung dieses Aufbaus erfolgt in einer Kurztakt-Presse bei einer Temperatur von 208 bis 218 °C für 15 Sekunden. Die Verpressung kann je nach zuvor aufgebrachtem Harz mit oder ohne eine verschleißhemmende Schicht (Overlay) erfolgen. Bei diesem Verpressungsprozess werden noch vorhandene Inhomogenitäten in der Harzverteilung ausgeglichen und eine dreidimensionale Vernetzung der Harzmatrix erreicht.

Um eine möglichst große Flexibilität im Hinblick auf die Verwendung und die Qualität der Overlays in Bezug auf die zu erreichende Verschleißfestigkeit zu besitzen, können die Papiere mit unterschiedlichen Mengen an verschleißhemmenden Mitteln beschichtet sein. Im Folgenden sind drei Ausführungsbeispiele beschrieben, die beispielhaft die Möglichkeiten wiedergeben. Dabei ist zu berücksichtigen, dass die Auftragsmengen je nach Verwendungszweck nach oben oder unten variieren können.

### 1. Ausführungsbeispiel

Eine HDF-Platte wird über einen Walzenauftrag mit 2 x 30 g Melaminharz/m² beschichtet. Anschließend wird das Melaminharz in einem Umlufttrockner auf eine Restfeuchte von 15 - 25 % zurückgetrocknet. Dann wird über eine Abrollung mit Andruckwalzen ein Dekorpapier (Grammatur: 60 - 70 g/m²) in den Harzfilm eingewalzt. Daran schließt sich der Auftrag von ca. 40 - 60 g Melaminharz/m² (Feststoffgehalt: 60 - 70 %) ebenfalls über einen Walzenauftrag an. Im Anschluss daran wird Korund (z. B. 15 - 25 g/m², F 220 nach FEPA-Standard) über eine Sprühvorrichtung auf das noch feuchte Papier aufgebracht. Es schließt sich der Auftrag von 2 -10 g Cellulose-fasern/m² (Faserlänge: 0,5 - 2,5 mm) über eine Streuapparatur an. Im Folgenden wird die Beschichtung der Platte auf 5 - 7 % getrocknet.

### 2. Ausführungsbeispiel

Eine HDF-Platte wird über einen Walzenauftrag mit 2 x 30 g Melaminharz/m² beschichtet. Anschließend wird das Melaminharz in einem Düsentrockner auf eine Restfeuchte von 15 - 25 % zurückgetrocknet. Dann wird über eine Abrollung mit Andruckwalzen ein Dekorpapier (Grammatur: 60 - 70 g/m²) in den Harzfilm eingewalzt. Daran schließt sich der Auftrag von ca. 60 - 80 g Melaminharz/m² (Feststoffgehalt 60 - 70 %) ebenfalls über einen Walzenauftrag an. Das Melaminharz enthält 15 Gew% Korund (F 220 nach FEPA-Standard) und 1,5 Gew% Cellulose (Faserlänge 0,5 - 2,5 mm). Die Beschichtung wird in einem Düsentrockner auf eine Feuchte von 5 - 7 % zurückgetrocknet.

### 3. Ausführungsbeispiel

Eine HDF-Platte wird über einen Walzenauftrag mit 2 x 30 g Melaminharz/m² beschichtet. Anschließend wird das Melaminharz in einem Düsentrockner auf eine Restfeuchte von 15 - 25 % zurückgetrocknet. Dann wird über eine Abrollung mit Andruckwalzen ein Dekorpapier (Grammatur: 60 - 70 g/m²) in den Harzfilm eingewalzt. Daran schließt sich der Auftrag von ca. 40 - 60 g Melaminharz/m² (Feststoffgehalt 60 - 70 %) ebenfalls über einen Walzenauftrag an. Die Beschichtung wird in einem Düsentrockner auf eine Feuchte von 5 - 7 % zurückgetrocknet.

## Patentansprüche

1. Verfahren zum Herstellen einer Bauplatte mit einem Kern aus einem Holzwerkstoff, insbesondere MDF oder HDF, und einer auf einer Oberseite aufgebrachten Dekorschicht aus bedrucktem Papier, indem zunächst auf den Kern eine Harzschicht aufgebracht wird, auf die Harzschicht die trockene Dekorschicht aus nicht imprägniertem Papier aufgelegt, auf die Dekorschicht eine Imprägnierharzschicht aufgebracht wird und anschließend dieser Aufbau unter Druck und erhöhter Temperatur miteinander verpresst wird, **dadurch gekennzeichnet, dass** die Harzschicht auf den Kern flüssig aufgetragen und vor dem Auflegen des Dekorpapiers nur soweit getrocknet wird, dass das Harz in der Lage ist, von der Rückseite in das Dekorpapier einzudringen.

2. Verfahren nach Anspruch 1, **dadurch gekennzeichnet, dass** das Dekorpapier mit einer Walze in das klebrige Harz eingewalzt wird.

3. Verfahren nach Anspruch 1 oder 2, **dadurch gekennzeichnet, dass** das Dekorpapier von einer Rolle abgezogen wird.

4. Verfahren nach Anspruch 1, **dadurch gekennzeichnet, dass** die Imprägnierharzschicht flüssig aufgebracht und auf das flüssige Harz pulverförmiges Harz aufgestreut wird.

5. Verfahren nach Anspruch 1 oder 4, **dadurch gekennzeichnet, dass** die Imprägnierharzschicht flüssig aufgebracht und auf das flüssige Harz verschleißhemmende Partikel aufgestreut werden.

6. Verfahren nach Anspruch 1 oder 4 oder 5, **dadurch gekennzeichnet, dass** die Imprägnierharzschicht flüssig aufgebracht und auf das flüssige Harz Zellulose aufgestreut wird.

7. Verfahren nach Anspruch 1, **dadurch gekennzeichnet, dass** die Imprägnierharzschicht flüssig aufgebracht wird und in das flüssige Harz pulverförmiges Harz eingemischt ist.

8. Verfahren nach Anspruch 1 oder 7, **dadurch gekennzeichnet, dass** die Imprägnierharzschicht flüssig aufgebracht wird und in das flüssige Harz verschleißhemmende Partikel eingemischt sind.

9. Verfahren nach Anspruch 1 oder 7 oder 8, **dadurch gekennzeichnet, dass** die Imprägnierharzschicht flüssig aufgebracht wird und in das flüssige Harz Zellulose eingemischt ist.

10. Verfahren nach einem oder mehreren der Ansprüche 4 bis 9, **dadurch gekennzeichnet, dass** der Feststoffgehalt der Imprägnierharzschicht maximal 70% beträgt.

11. Verfahren nach einem oder mehreren der Ansprüche 4 bis 10, **dadurch gekennzeichnet, dass** die Imprägnierharzschicht anschließend auf eine definierte Restfeuchte heruntergetrocknet wird.

12. Verfahren nach Anspruch 11, **dadurch gekennzeichnet, dass** die Restfeuchte 5 bis 7% beträgt.

13. Verfahren nach Anspruch 1, **dadurch gekennzeichnet, dass** die Harzschicht in mehreren Einzelschichten aufgetragen wird und eine Trocknung nach jedem Einzelschichtauftrag erfolgt.

14. Verfahren nach Anspruch 1 oder 13, **dadurch gekennzeichnet, dass** die Harzschicht in einer Menge von 20 bis 40 g/m2 aufgetragen wird.

15. Verfahren nach einem oder mehreren der vorstehenden Ansprüche, **dadurch gekennzeichnet, dass** die Verteilung des insgesamt aufgetragenen Harzes mindestens zu einem Drittel und höchstens zu zwei Dritteln auf den Kern erfolgt.

## Claims

1. Method for producing a structural panel with a core made of a wood-based material, in particular MDF or HDF, and a decorative layer made of printed paper applied to an upper side, in which a resin layer is firstly applied to the core, the dry decorative layer of non-impregnated paper is applied to the resin layer, an impregnating resin layer is applied to the decorative layer and then this structure is pressed together under pressure and at an elevated temperature, **characterised in that** the resin layer is applied in liquid form to the core and, before the application of the decorative paper, is only dried to such an extent that the resin is in a position to penetrate from the rear into the decorative paper.

2. Method according to claim 1, **characterised in that** the decorative paper is rolled into the tacky resin with a roller.

3. Method according to claim 1 or 2, **characterised in that** the decorative paper is drawn off from a roll.

4. Method according to claim 1, **characterised in that** the impregnating resin layer is applied in liquid form and powdery resin is scattered onto the liquid resin.

5. Method according to claim 1 or 4, **characterised in that** the impregnating resin layer is applied in liquid form and wear-inhibiting particles are scattered onto the liquid resin.

6. Method according to claim 1 or 4 or 5, **characterised in that** the impregnating resin layer is applied in liquid form and cellulose is scattered onto the liquid resin.

7. Method according to claim 1, **characterised in that** the impregnating resin layer is applied in liquid form and powdery resin is mixed into the liquid resin.

8. Method according to claim 1 or 7, **characterised in that** the impregnating resin layer is applied in liquid form and wear-inhibiting particles are mixed into the liquid resin.

9. Method according to claim 1 or 7 or 8, **characterised in that** the impregnating resin layer is applied in liquid form and cellulose is mixed into the liquid resin.

10. Method according to any one or more of claims 4 to 9, **characterised in that** the solid content of the impregnating resin layer is a maximum of 70%.

11. Method according to any one or more of claims 4 to 10, **characterised in that** the impregnating resin layer is then dried to a defined residual moisture.

12. Method according to claim 11, **characterised in that** the residual moisture is 5 to 7%.

13. Method according to claim 1, **characterised in that** the resin layer is applied in a plurality of individual layers and drying takes place after each individual layer application.

14. Method according to claim 1 or 13, **characterised in that** the resin layer is applied in a quantity of 20 to 40 g/m2.

15. Method according to any one or more of the preceding claims, **characterised in that** the total resin applied is distributed with at least one third and at most two thirds of on the core.

## Revendications

1. Procédé de fabrication d'un panneau de construction comprenant un noyau en un matériau dérivé du bois, en particulier MDF ou HDF, et une couche de décor en papier imprimé appliquée sur une face supérieure, dans lequel on applique tout d'abord une couche de résine sur le noyau, on dépose sur la couche de résine la couche de décor sèche en papier non imprégné, on applique sur la couche de décor une couche de résine d'imprégnation puis on presse ensemble cette structure sous pression et température élevée, **caractérisé en ce que** l'on applique la couche de résine à l'état fluide sur le noyau et on ne la sèche avant de déposer le papier de décor que dans une mesure telle que la résine soit en état de pénétrer dans le papier de décor par la face arrière.

2. Procédé selon la revendication 1, **caractérisé en ce que** l'on lamine le papier de décor dans la résine collante à l'aide d'un cylindre.

3. Procédé selon la revendication 1 ou 2, **caractérisé en ce que** l'on tire le papier de décor depuis un rouleau.

4. Procédé selon la revendication 1, **caractérisé en ce que** l'on applique la couche de résine d'imprégnation à l'état fluide et on éparpille de la résine sous forme poudreuse sur la résine liquide.

5. Procédé selon la revendication 1 ou 4, **caractérisé en ce que** l'on applique la couche de résine d'imprégnation à l'état fluide et on éparpille des particules anti-usure sur la résine liquide.

6. Procédé selon la revendication 1 ou 4 ou 5, **caractérisé en ce que** l'on applique la couche de résine d'imprégnation à l'état fluide et on éparpille de la cellulose sur la résine liquide.

7. Procédé selon la revendication 1, **caractérisé en ce que** l'on applique la couche de résine d'imprégnation à l'état fluide et on incorpore de la résine sous forme poudreuse dans la résine liquide.

8. Procédé selon la revendication 1 ou 7, **caractérisé en ce que** l'on applique la couche de résine d'imprégnation à l'état fluide et on incorpore des particules anti-usure dans la résine liquide.

9. Procédé selon la revendication 1 ou 7 ou 8, **caractérisé en ce que** l'on applique la couche de résine d'imprégnation à l'état fluide et on incorpore de la cellulose dans la résine liquide.

10. Procédé selon l'une ou plusieurs des revendications 4 à 9, **caractérisé en ce que** la teneur en matière solide de la couche de résine d'imprégnation s'élève au maximum à 70%.

11. Procédé selon l'une ou plusieurs des revendications 4 à 10, **caractérisé en ce que** l'on assèche ensuite la couche de résine d'imprégnation à une humidité résiduelle définie.

12. Procédé selon la revendication 11, **caractérisé en ce que** l'humidité résiduelle est entre 5 et 7%.

13. Procédé selon la revendication 1, **caractérisé en ce que** l'on applique la couche de résine en plusieurs couches individuelles et un séchage s'effectue après chaque application de couche individuelle.

14. Procédé selon la revendication 1 ou 13, **caractérisé en ce que** l'on applique la couche de résine dans une quantité allant de 20 à 40 g/m2.

15. Procédé selon l'une ou plusieurs des revendications précédentes, **caractérisé en ce que** la répartition de l'ensemble de la résine appliquée s'effectue au moins pour un tiers et au plus pour deux tiers sur le noyau.
